# EUROPEAN PATENT APPLICATION

(11) **EP 4 738 031 A1**
(43) Date of publication of application: **06.05.2026**
(21) Application number: 25212979.6
(22) Date of filing: 03.11.2025
(51) Int. Cl.: G05B 19/042, G05B 19/418

(54) **CONTROL SYSTEM FOR INDUSTRIAL PLANTS**

(30) Priority: 04.11.2024 IT 202400024633
(71) Applicant: Ivory7 S.r.l., 29122 Piacenza (PC) (IT)
(72) Inventor: Stramigioli, Ludovico, 29010 Rottofreno (PC) (IT); Fava, Andrea, 29122 Piacenza (IT)
(74) Representative: Lunati & Mazzoni S.r.L.

(57) **Abstract**

It is provided a control system (1) for industrial plant (10), the industrial plant (10) comprising a plurality of industrial devices (11), comprising sensors and/or data-emitting devices, and one or more connections to the outside world for the communication of data output from sensors and/or data-emitting devices, the control system (1) being characterized by the fact that it includes: a plurality of endpoints (2), each comprising a microprocessor and a computer-like memory, said endpoint (2) being connected to an industrial device (11) and being configured to communicate with the industrial device (11) and receive data output and transmit information and commands, a coordinating device (3) comprising a microprocessor and computer-type memory, the coordinating device (3) being connected to said plurality of endpoints (2), a control processor (4) comprising a microprocessor and a computer-type memory, and configured to enable the centralized management of the control system (1) and the industrial plant (10) by means of an easily intuitive and understandable interface, to transform said data from the industrial devices (11) into human readable data at run-time, the control processor (4) being connected, within the control system (1), exclusively to the coordinating device (3).

## Description

### CONTROL SYSTEM FOR INDUSTRIAL PLANTS

The present invention relates to a control system or apparatus for an industrial plant of the type specified in the preamble to the first claim.

Various control systems for industrial production facilities are currently known, consisting of, for example, machine tools, processing machines, control machines and more. The term control is generically understood to mean the control and/or command of said industrial plants.

For example, PLC-type control systems are well known.

PLCs are programmable electronic devices that perform real-time logic and control functions. To perform these functions, they are equipped with a microprocessor and input and output systems to receive and send signals between an industrial machine and the microprocessor and/or electronics performing the operations.

In summary, PLCs are versatile and essential tools for industrial automation because of their ability to provide precise and reliable process control.

However, PLCs are more suitable for controlling a single machine than for controlling an industrial plant.

They have, in addition, a generally very complex programming communication interface with the user.

Then there are the control systems of the DCS (Distributed Control System) type. A DCS control system is a control architecture used mainly in industrial automation for monitoring and controlling processes and plants that include a plurality of industrial machines and are therefore more complex.

DCS systems use a bottom-up logic architecture.

In a DSC system there are a number of electronic devices communicating with the individual machines and industrial organs that make up the plant.

Such electronic devices send data to the operator. The latter, through a special interface, can adjust and control the machine connected to the said electronic device. Data received and changes made by the user are stored in a computer-type server.

In DSC systems there is also an additional layer comprising a computer processor in communication with individual electronic devices and having access to stored data. Through the said electronic operator, an operator can monitor the entire plant and the proper execution of processes.

The use of a DCS system improves a plant's automation and efficiency.

However, even then the control system is complex for the end user to use and adjust. In addition, operators adjust the individual machines that make up the plant without worrying about the interaction with other machines. In fact, the control of the entire system, performed at a higher level, is implemented only downstream. There are also remote telemetry units (RTUs) that monitor digital and analog field parameters and transmit data to a central monitoring station and also distributed supervisory control and data acquisition (SCADA) systems consisting of technological solutions used for remote monitoring and control of industrial processes and infrastructure.

Such a system is also described in patent application US 2021/0397166 A1.

The prior art described comprises some important drawbacks.

In particular, as previously mentioned, industrial plant control systems must be implemented in a customized manner specific to each different plant.

They are also very complex both to implement and to control or repair in case of malfunction.

In addition, the control systems of industrial plants allow control and optimization of the entire plant only downstream.

In this situation, the technical task underlying this invention is to devise a control system capable of substantially overcoming at least part of the aforementioned drawbacks.

Within the scope of said technical task, it is an important purpose of the invention to obtain an industrial plant control system easily implementable on the industrial plants themselves.

Another important purpose of the invention is to realize an industrial plant control system that is simple and robust.

Another important purpose of the invention is to realize an industrial plant control system capable of optimizing industrial processes.

The technical task and the specified aims are achieved by an industrial plants control system as claimed in the annexed claim 1.

Preferred embodiments are highlighted in the dependent claims.

The characteristics and advantages of the invention are clarified below by the detailed description of preferred embodiments of the invention, with reference to the accompanying figures, in which:

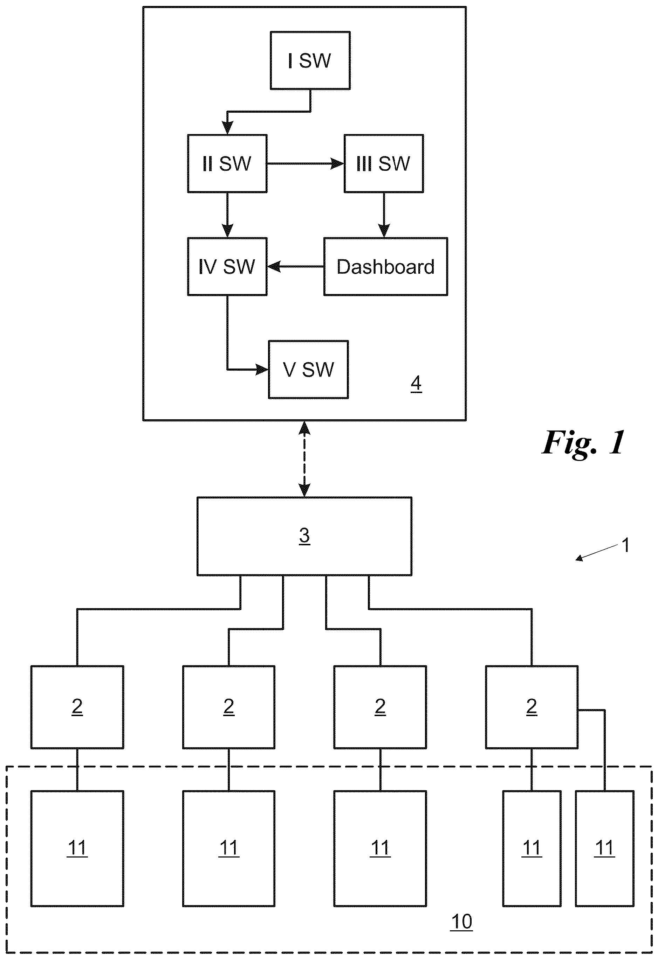

**Fig. 1** shows a scheme of the operation of the device according to the invention.

In this document, when measurements, values, shapes, and geometric references (such as perpendicularity and parallelism) are associated with words like "approximately" or other similar terms, such as "almost" or "substantially", they are to be understood as excluding measurement errors or inaccuracies due to production and/or manufacturing errors and, above all, as having less than a slight deviation from the associated value, measurement, shape, or geometric reference. For example, if associated with a value, such terms preferably indicate a deviation of no more than 10% of the value itself.

Furthermore, when terms such as "first", "second", "upper", "lower", "main", and "secondary" are used, they do not necessarily identify an order, relationship priority, or relative position, but they can simply be used to distinguish different components more clearly from one another.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

The measurements and data reported in this text are to be considered, unless otherwise indicated, as performed in the International Standard Atmosphere ICAO (ISO 2533:1975).

With reference to the figures, the control system according to the invention is globally indicated with the number **1.**

It is capable of controlling industrial plants **10** comprising a plurality of industrial devices **11.**

The term industrial device 11 means an industrial machine, such as a machine tool, a process machine, a control machine, or a portion of the said machine or even a simple industrial tool or device such as a valve, pump or other.

Each industrial device 11 includes sensors and devices in general that output data, such as operation data, and one or more connections to the outside world for output data communication.

Control system 1 includes at least one, and preferably a plurality of, endpoints **2.** In brief, endpoints 2 are preferably connected to a coordinating device **3,** described below, which in turn is connected to a control processor **4,** described below and preferably operating remotely (i.e. through a web connection) and/or in the cloud. Endpoints 2 are electronic devices equipped with a microprocessor and an IT memory that can be read by the microprocessor.

Each endpoint 2 is also directly connected to at least one industrial device 11 and can be connected to a plurality of industrial devices 11. Endpoints 2 are then, preferably, configured to communicate with industrial devices 11. Such communication may preferably be from endpoint 2 to industrial device 11, e.g., to send commands, and from industrial device 11 to endpoint 2, e.g., to transmit operating information and sensor data on board industrial device 11 to endpoint 3. Such a connection can be wireless or wired.

For the purpose of implementing said connection, each endpoint 2 preferably includes multiple interface connections **20,** preferably digital, analog and serial. Endpoint 2 also preferably supports industrial sensors of different types, e.g., at least one of, and preferably all of the following types: PNP, 4-20 mA, I2C, SPI.

Endpoints 2 are responsible for interaction with industrial devices 11 preferably through different interfaces:
- GPIO for digital inputs and outputs.
- SPI and I2C for communication with sensors and other devices.
- ADCs and DACs for reading and generating analog signals.
- PWM for generating modulated signals.

Each endpoint 2 also has a first internal connection **21** to interact with the remaining part of the control system 1, specifically with the coordinating device 3 or alternatively with the control processor 4. The said first internal connection 21 can be wireless, preferably RF type, or wired, preferably fieldbus type or similar. Preferably, each endpoint 2 includes one or more microprocessors or microcontrollers, preferably ARM-type, more preferably ARM-Cortex, preferably configured to be connected directly to industrial device 11 peripherals. In addition, preferably, each endpoint 2 includes integrated firmware.

Each endpoint 2 preferably parses information from the industrial device 11 to which it is connected through the information contained in the database described below or automation functionality standardization protocol. This preferably allows them to execute read/write commands on the peripherals autonomously, following timing, interrupt and conditioning logic. Each endpoint 2 is also configured to perform complex control logic and communicate intelligently with the upper layer, then preferably with coordinating device 3.

Each endpoint 2 also, preferably, can execute and save a wide range of commands, according to the logic sent by the control processor 4, without any need for direct reprogramming.

Each endpoint 2 also, preferably, is capable and more preferably is configured to interact with a wide range of industrial devices 11. This interaction takes place by means of a database described below.

Each control system 1 also preferably includes a coordinating device 3, as previously mentioned.

Coordinating device 3 is preferably an electronic device with a microprocessor and memory. It is preferably basically an industrial PC more preferably with Unix-Based operating system.

Coordinating device 3 has at least one second internal connection **30** configured to connect with a plurality of first internal connections 21 of a plurality of endpoints 2. The said second internal connection(s) 30 are preferably wireless, preferably RF type, or wired, preferably fieldbus type or similar. Preferably all endpoints 2 of industrial plant 10 are connected to the same coordinating device 3.

Coordinating device 3 handles two-way communication with endpoints 2 and is connected to control processor 4.

Coordinator device 3 is preferably in master/slave configuration with endpoints 2. It preferably extracts data cyclically from endpoints 2, checking their status, collecting data and sending them received commands, and processes commands that come from the control processor 4 or generated independently. In addition, preferably, the coordinating device 3 serves as a gateway to the control processor 4. The latter is very stable and precisely ensures stability, handshaking and monitoring of endpoint 2 connections.

Consequently, the coordinating device 3 coordinates the system locally, as the control processor 4 is preferably remote and/or in the cloud and plays an active role in monitoring and controlling the system.

The coordinating device 3 also acts as a bridge between endpoint 2 and control processor 4, for example, translating raw data from endpoints 2 into structured information that it sends to control processor 4 for processing and analysis.

At the same time, the coordinating device 3 receives instructions and configurations from the control processor 4, translates them into endpoint-specific commands, and distributes them efficiently.

In this way, the coordinating device 3 preferably ensures a two-way flow of information between the industrial plant 10 and the control processor 4 allowing basically real-time or otherwise very rapid and timely control and centralized management of the plant 10 itself.

Coordinating device 3 also, preferably, forwards commands from control processor 4 to the appropriate endpoints 2, manages communication with endpoints 2, monitors the status of endpoints 2 and communicates it to control processor 4, and also, preferably, executes commands specific to its hardware.

Finally, the coordinating device 3 includes a third data connection with the control processor 4. Since the latter is preferably remote and/or in the cloud, the connection is preferably an Internet connection, or, if on-site a network connection or other.

Control processor 4 consists of an electronic server, including at least one microprocessor and a computer memory connected to and readable by the microprocessor.

Control processor 4 command is therefore preferably implementable from any computer connected to the Web, via appropriate Web address and, preferably, by means of security identifications, e.g., by user name and password or otherwise.

Alternatively, a direct connection, such as via cable, with control processor 4 is possible.

Control processor 4 includes and executes, on command, control software that manages control system 1 and is user-adjustable and controllable via the web interface with a computer or electronic device.

The control software consists of a set of software that, as a whole, enables centralized management and intelligent orchestration of industrial plant 1. In practice, a single server, a single computer, can be connected to a plurality of 3 coordinating devices, even arranged in different companies, but each will have its own software, or its own user on the software, separate from the others keeping preferably the data of the various users separate and independent.

Control processor 4, understood as a set of hardware and software, collects, processes, and analyzes data from endpoints 2 through the coordinating device 3 and provides a user interface for plant management, configuration, and monitoring. This interface is easily intuitive and therefore well understood and implementable by even a non-programmer user.

The control software preferably consists of a plurality of additional software, preferably five different software which are, preferably the following software.
- A first software preferably constitutes the design and configuration tool that allows blueprints to be defined for the coordinating device 3 and endpoints 2. Such a blueprint can address and schedule the sensors present and connected to endpoints 2, can define instances of endpoint 2 and coordinating device 3 associated with specific industrial devices 11, define the plant network, and the like.
- A second software is, preferably, a no-code tool, i.e., one that can be programmed or set through variable patterns or choices so that for generating and configuring plant logic, automation routines, and defining commands to be sent to end points in the field. Such software allows the operator to program or set, via preferably online interface, the behavior of the industrial plant preferably even without software programming skills.
- A third software is preferably a SCADA editor. It is a preferably no-code tool for generating and inserting graphical widgets within the user interface. It then allows the user to fully manage and configure the display of data and control widgets for the plant.
- A fourth software acts as a decoder of plant logic, defined by the automation coordination function. Such software takes care of parsing the raw data from the endpoints 2 through the coordinating device 3 from the system and analyzes it using the database, previously mentioned, or automation functionality standardization protocol, that preferably allows parsing of information specific to each sensor or actuator in the field. This parsing process allows for accurate and meaningful interpretation of data, preferably enabling monitoring and control of even heterogeneous systems.

Said database is structured in such a way as to contain the information necessary for the management of industrial device 11 peripherals and in such a way as to standardize the information necessary for the operation of industrial devices 11, and/or their sensors and data-emitting devices, even those that are very different from each other both in command mode and in the number of commands required for their implementation. Similarly in the case of sensors in devices 11 the standardization of the information coming from the sensor allows sensors of extremely different types to be read both as an interface and as a size and type of data and automatically allow the system to transform the raw data into human readable data.

In details, endpoints 2 receive raw data from industrial devices 11 and send the same to control processor 4. The latter, through the said database retrieves the saved information in the form of code or pseudo code necessary for raw data transformation and executes this code or pseudo code at run-time transforming the data into a human readable data type. The term pseudo code means either actual code or, more preferably, a language somewhere between code and a textual list of information.

Through the fourth software, or at any rate through control processor 4, two types of messages are defined: commands, which are sent by control processor 4 to request actions from endpoints 2, and responses, which are sent by endpoints 2 to notify the outcome of commands or to send data.

The commands can be of different types:
- Saving: stores a command for later execution.
- Task: executes a saved command at a specific time.
- Periodic: executes a saved command at regular intervals.
- Interrupt: executes a saved command in response to a hardware event.
- Instantaneous: executes a command immediately.

In addition, preferably, the fourth software, or at any rate through control processor 4 performs an initial handshake phase for device configuration and synchronization. It also defines a checksum mechanism to ensure data integrity and synchronization between cloud and devices.

Said database may also be present in other portions of software, it may be present in the control processor 4 or even in the coordinating device 3 or endpoints 2.
- A fifth software, is the central part of the management software, is the first software to which data is received from the device. It manages the database or protocol described as part of the fourth software on the computer connected to the control processor 4 and the endpoints 2 connected to the industrial devices 11. The fourth software also manages the message queue with a prioritization system and a retry policy for error handling, composing messages according to the proprietary protocol. It communicates asynchronously with the coordinating device 3, ensuring a reliable connection. In addition, the fourth software saves data, preferably raw, from the sensors and monitors the connection of the coordinating device 3, managing handshaking to establish reliable connections. This bidirectional mechanism confers important advantages because it creates and keeps the various connections between endpoint 2, coordinating device 3 and control processor 4 stable and resilient.

The control software also includes a dashboard that is intended to show the user interface for plant control as defined by the third software.

Control system 1 is also configured to implement artificial intelligence algorithms, more specifically machine learning algorithms, even more specifically neural networks, in order to optimize the operation of industrial plant 1, as described below. Appropriately, processor 4 allows the user, through the described software and interfaces, to configure neural network training without having to apply traditional type programming through code, but being able to configure the same through a graphical editor or simple intuitive choices.

Artificial intelligence will then be able to rely on retrieved data from industrial devices 11 taken from endpoints 2, sent via the coordinating device 3 to the control processor 4 and saved and processed by the latter.

The deployment of the network can take place at three separate levels allowing the application of predictions on the entire control system 1 and industrial plant 10.

In this way, the user can translate his know-how about a specific plant process into a deterministic relationship between the field variables in play and then transfer his experience and expertise to a machine learning algorithm that will preferably provide reliable predictions about the performance of the industrial process in question and that is preferably able to act directly on industrial devices 11 to optimize said process.

Artificial intelligence software that enables the training of a neural network is preferably deployed on three different levels of control system 1, described below.
- A first level of artificial intelligence is arranged and operated by control processor 4. It allows training of the control system 1 preferably on all possible variables, thus on all control device settings 11 or, more preferably, on user-specified variables. It can also, preferably, analyze all variables i.e., all data from industrial devices 11, taken from endpoints 2, sent via the coordinating device 3 to the control processor 4. The first level of artificial intelligence, moreover, preferably provides predictive values on process variables that are useful for improving decision making and operation of the industrial plant 10. These forecast values are also provided by the next levels.
- A second level of artificial intelligence is implemented on the coordinating device 3. Preferably, this level also allows training of the control system 1 and industrial plant 10 on all variables belonging to the coordinating device 3 network, i.e., on all endpoints 2 and their connected industrial devices 11. This second level of artificial intelligence cyclically monitors the data coming to it and the related field variables, directly querying the connected endpoints 2, and acts on the possible adjustments that can be implemented on the connected industrial devices 11 by communicating with the appropriate endpoints 2 according to the model predictions. The second level can also provide predictive values.
- A third layer of artificial intelligence is implemented directly on board endpoints 2 and preferably enables network training on data from the industrial device 11 directly connected to endpoint 2 itself. In fact, the endpoint preferentially, cyclically and directly monitors data from the industrial device 11 and acts autonomously on the possible adjustments that can be implemented on the individual connected industrial device 11 according to the predictions implemented globally by artificial intelligence. The second level can also provide predictive values.

In short, preferably, control processor 4 performs most or all of the training of control system 1, since it can analyze all the information and variables in control system 1, while predictions are made by all levels, thus by both control processor 4, endpoints 2 and coordinating device 3.

In short, the first level of artificial intelligence has the advantage of having greater knowledge and visibility of all the data in the whole plant, the third level of artificial intelligence can act more directly and faster on the individual device. The second level of intelligence lies somewhere between the two.

The said control system 1 also has an innovative industrial control process, in which the described industrial plant 10 acts according to the described procedures implemented by the described control system 1.

Control system 1 according to the invention achieves important advantages.

First, control system 1 is simple and effective. It is also cheaper and more robust than known systems such as DCS-type control systems.

In addition, the optimization of the industrial plant 10, operated by the control system 1 preferably achieves a reduction in downtime. In fact, artificial intelligence, learning from operator experience, can predict and prevent process failures or anomalies, reducing unplanned downtime. Studies indicate that predictive optimization can reduce downtime by up to 50%.

The optimization of the industrial plant 10, operated by control system 1 also preferably achieves an improvement in the efficiency of the plant 10 itself. In fact, artificial intelligence can identify opportunities for improvement in the process, leading to an increase in overall plant efficiency of up to 40 percent.

The optimization of industrial plant 10, operated by the control system 1 also preferably achieves quality improvement, such as error reduction. In fact, artificial intelligence can detect and correct errors in the process in real time, reducing the number of defective products and production errors by up to 20 percent. The neural network can perform more accurate and sophisticated quality checks, ensuring that only high-quality products leave the plant.

The optimization of industrial plant 10, operated by control system 1 also preferably achieves greater flexibility and adaptability of industrial plant 10 itself. In fact, artificial intelligence can quickly adapt to changes in process or operating conditions, ensuring that the plant remains efficient even in unforeseen situations.

The invention can be modified to create different versions falling within the scope of the inventive concept defined by the claims.

In this context, all the details can be replaced by equivalent elements and any materials, shapes and dimensions can be used.

## Claims

1. Control system (1) for industrial plant (10),
- said industrial plant (10) comprising a plurality of industrial devices (11), comprising sensors and/or data-emitting devices, and one or more connections to the outside world for the communication of data output from said sensors and/or data-emitting devices,
- said control system (1) being **characterized by** the fact that it includes:
- a plurality of endpoints (2), each comprising a microprocessor and a computer-like memory, said endpoint (2) being connected to at least one of said industrial devices (11) and being configured to communicate with said industrial device (11) and receive said data output and transmit information and commands to said industrial devices (11),
- a coordinating device (3) comprising a microprocessor and computer-type memory, said coordinating device (3) being connected to said plurality of said endpoints (2),
- a control processor (4) comprising a microprocessor and a computer-type memory, and configured to enable the centralized management of said control system (1) and said industrial plant (10) by means of a human-readable interface, e.g. easily intuitive and understandable, and to transform said data from said industrial devices (11) into human readable data at run-time,
- said control processor (4) being connected, within said control system (1), exclusively to said coordinating device (3).

2. Control system (1) according to claim 1, comprising a database for interacting with a plurality of said industrial devices (11) containing the information necessary for the management of said industrial devices (11) so as to standardize the information necessary for the operation of even different peripheral devices both in command mode and in the number of commands required for their implementation.

3. Control system (1) according to claim 2, wherein said database contains instructions having the purpose of standardizing information from said sensors and/or data-emitting devices part of said industrial devices (11).

4. Control system (1) according to any of the preceding claims, comprising only the described components.

5. Control system (1) according to any of the preceding claims, wherein said control processor (4) is arranged remotely, i.e. via web connection, from said endpoints (2) and said coordinating device (3), and wherein said endpoints (2) and said coordinating device (3) are arranged at said industrial plant (10).

6. Control system (1) according to any of the previous claims, wherein each of said endpoints (2) has an ARM-type processor.

7. Control system (1) according to any of the preceding claims, wherein each said endpoint (2) includes interface connections (20), to interact with said industrial device (11), of PNP, 4-20 mA, I2C and SPI types.

8. Control system (1) according to any of the previous claims, wherein said control processor (4) is configured to implement machine learning algorithms in order to optimize the operation of said industrial plant (1).

9. Control system (1) according to the preceding claim, wherein said coordinating device (3), said endpoints (2) and said control processor (4) each implement machine learning algorithms.

10. Control system (1) according to claim 8 or 9, wherein said artificial intelligence algorithms are neural networks.

11. Control system (1) according to any of claims 8-10, wherein said control processor (4) is configured to perform at least most of the training, relating to said machine learning algorithms, of said control system (1).

12. Control system (1) according to any of claims 8-11, wherein at least one among said control processor (4), said controller (3) and said endpoints (2) are configured to perform predictions, via said machine learning algorithms.

13. Industrial plant (10) comprising a plurality of industrial devices (11), comprising sensors and/or data-emitting devices, and one or more connections to the outside for the communication of data output from said sensors and/or data-emitting devices, and a control system (1) according to any of the preceding claims.
